# EUROPÄISCHE PATENTANMELDUNG

(11) **EP 1 850 000 A1**
(43) Veröffentlichungstag der Anmeldung: **31.10.2007**
(21) Anmeldenummer: 07008298.7
(22) Anmeldetag: 24.04.2007
(51) Int. Cl.: F03B 17/00

(54) **Wasserkraftwerk mit verstärkter elektrischer Leistung**

(30) Priorität: 25.04.2006 DE 102006019008
(71) Anmelder: Buchta, Johann, 35396 Gießen (DE)
(72) Erfinder: Buchta, Johann, 35396 Gießen (DE)
(74) Vertreter: Goroll, Peter

(57) **Zusammenfassung**

Die elektrische Anlage verbessert die Leistung eines Wasserkraftwerks um ein vielfaches. Schon bei niedrigem Wasserfall und geringem Wasserverbrauch wird eine größere elektrische Leistung erreicht. Die Kombination einer heute gebräuchlichen Peltonturbine mit mehreren Modulen (Fig.1, Fig.2, Fig.3) erhöht die KW-Leistung eines Wasserkraftwerks. Die Anlage wird ausschließlich mit der Schwerkraft der erde betrieben und ist überall verwendbar.
1. Fluß
2. Flut/Ebbe
3. Garten (Wasserwiederverwertung = siehe Fig.5)
4. Wüste (Wasserwiederverwertung = siehe Fig.5)

## Beschreibung

### Zyklus nach links:

Durch das Öffnen von Ventil II.1 wird Behälter II. mit 100 Liter ≈ 100 Kg Wasser gefüllt. Das Gewicht des Behälters II. drückt über eine hydraulische Verbindung auf die Kolbenfläche des Hauptzylinders 7.

Über das geöffnete Ventil 1. der linken Hauptzylinderkammer wird Flüssigkeit mit einem Druck von 10 bar in den Kondensator 6. transportiert und anschließend durch. Ventil 5. zu den Schaufeln der Pelltonturbine 8. weitergeleitet.

Gleichzeitig wird außerdem der leere Behälter I. aufwärts gedrückt. Schließlich läuft die Flüssigkeit durch das geöffnete Ventil 4. in die rechte Kammer des Hauptzylinders 7.

Nach dem Beenden des Vorgangs des zweiten Zyklus nach links wird das Wasser aus dem Behälter II. durch Ventil II.2 abgelassen.

Die Ventile 1. und 4. des Hauptzylinders 7. sind geschlossen.

### Zyklus nach rechts:

Durch das Öffnen von Ventil I.I wird der Behälter I. mit 100 Liter ≈ 100 Kg Wasser gefüllt. Das Gewicht des Behälters I. drückt über eine hydraulische Verbindung auf die Kolbenfläche des Hauptzylinders 7.

Über das geöffnete Ventil 2. der rechten Hauptzylinderkammer wird Flüssigkeit mit einem Druck von 10 bar in den Kondensator 6. transportiert und anschließend durch Ventil 5. zu den Schaufeln der Pelltonturbine 8. weitergeleitet.

Gleichzeitig wird außerdem der leere Behälter II. aufwärts gedrückt. Schließlich läuft die Flüssigkeit durch das geöffnete Ventil 3. in die linke Kammer des Hauptzylinders 7.

Nach dem Beenden des Vorgangs des ersten Zyklus nach rechts wird das Wasser aus dem Behälter I. durch Ventil 1.2 abgelassen.

Die Ventile 2. und 3. des Hauptzylinders 7. sind geschlossen.

Durch das Anwenden des geschlossenen Kreislaufs und drei Meter Wasserfall kann im Vergleich mit anderen Methoden der Stromgewinnung durch Wasserkraft eine höhere Leistung erreicht werden.

Der nötige Betriebsdruck für die Peltonturbine (8) wird mithilfe des Gewichts der Behälter I und II gewonnen, die auf Wunsch regulierbar sind.

Die Verwendung hydraulischen Öls im geschlossenen Kreislauf:
(1) Hauptzylinder 7. (Hydrozylinder),
(2) Kondensator 6.,
(3) Peltonturbine 8. mit Stromgenerator,
verspricht dem System eine langdauernde Arbeitsleistung.

Ein Kondensator (6) mit Luftkissen ermöglicht eine gleichmäßige Arbeit der Peltonturbine (8) durch den Wechsel des Zyklus I auf II und II auf I.

Der Antrieb des Hauptzylinders (7) kann:
(1) mechanisch,
(2) hydraulisch
(3) pneumatisch
(4) gemischt sein.

Alle Antriebsmethoden des Hauptzylinders (7) sind nur mit Zustimmung des Patentinhabers zulässig.
Die Anlage ist kostengünstig herzustellen, verspricht Langdauernde Leistung und ist umweltfreundlich.

### Technische Daten:

Hauptzylinder 7 (Hydrozylinder): 3 m Lange, 1 m Durchmesser = 2355 Liter

### Peltonturbine 8

(nach dem Diagramm der Peltonturbine :13 l/s =10 bar = 10 KW)
13 l/s x 60s = 780 l/min
2355 l:780 l/min 3 min = 1zykl (Zyklus)
60 min (h) : 3 min 20 zykl/h links rechts

Wasserverbrauch Behälter I und II
20 zykl x 1001 = 2000 l/b - 2 m³
2000 l/h x 24 h = 48000 l/Tag = 48 m³

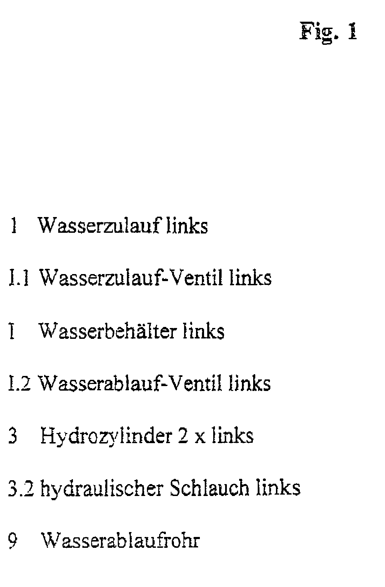

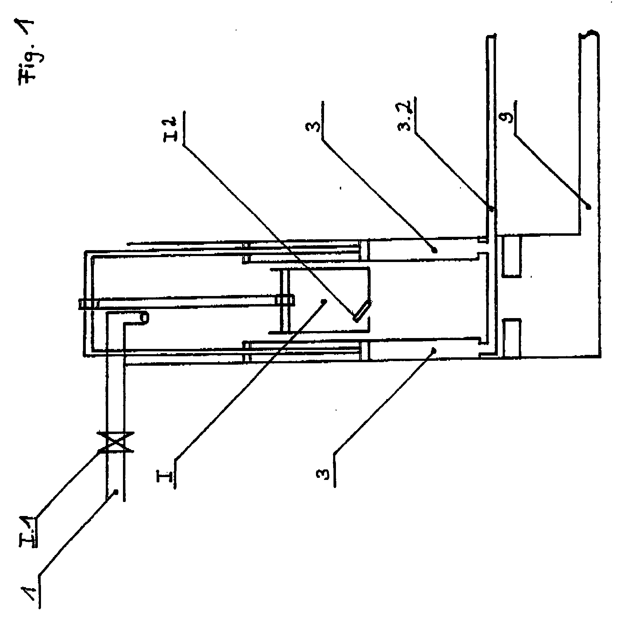

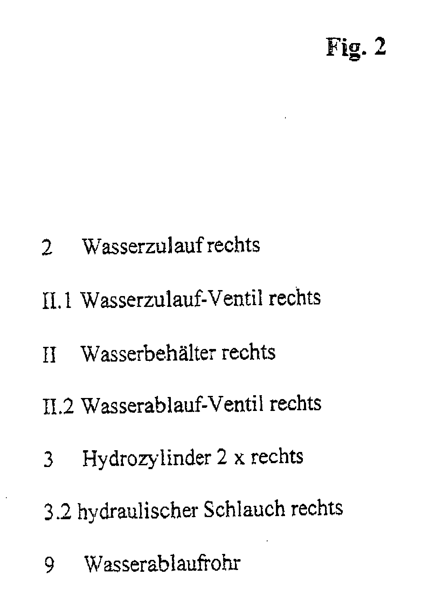

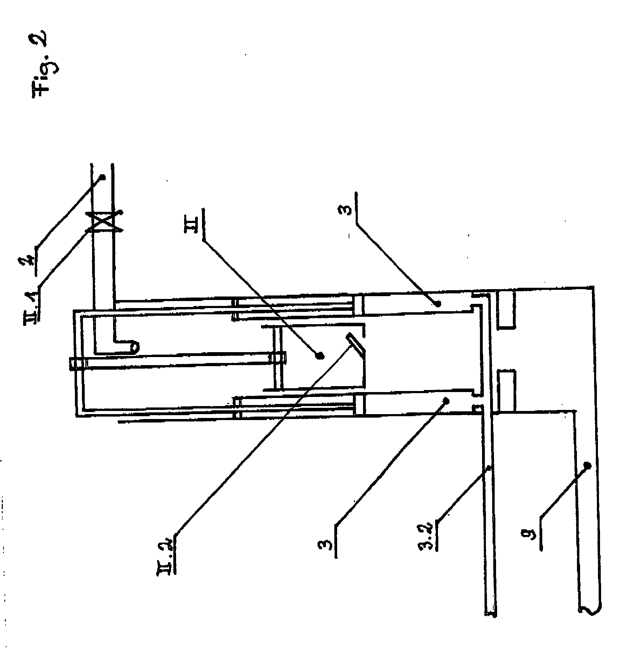

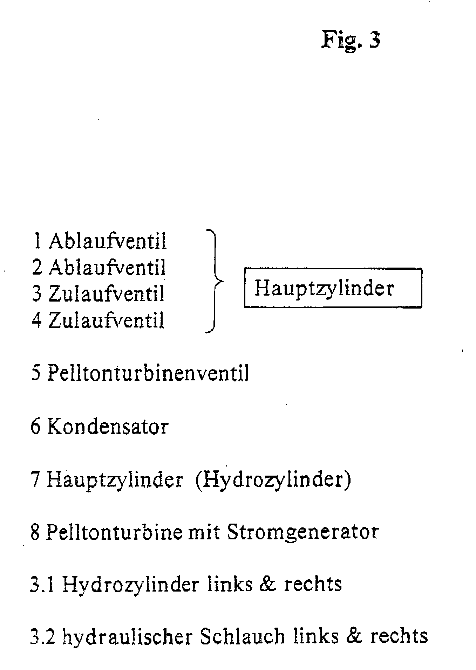

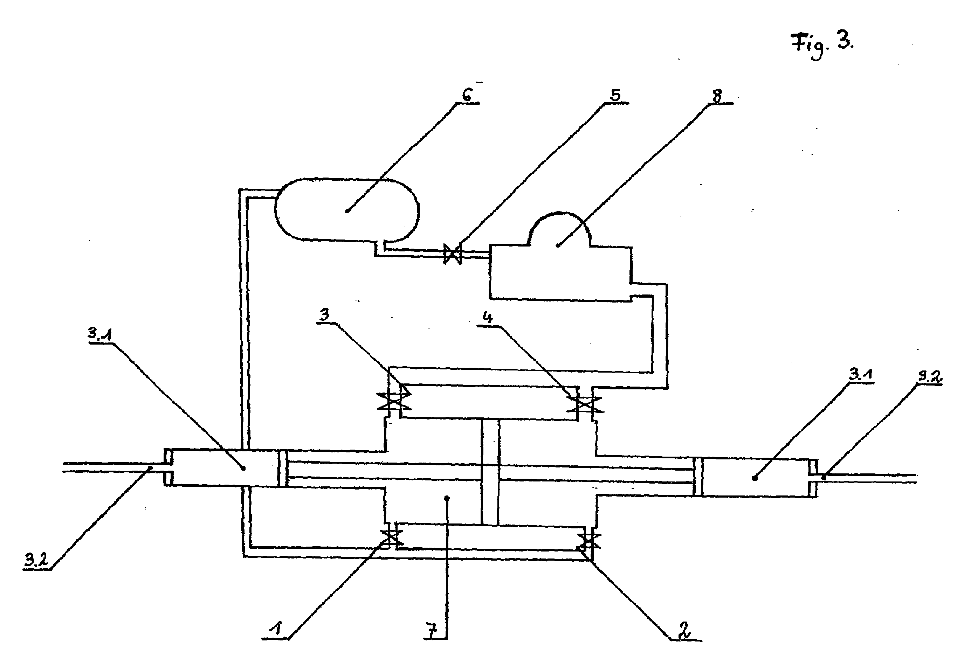

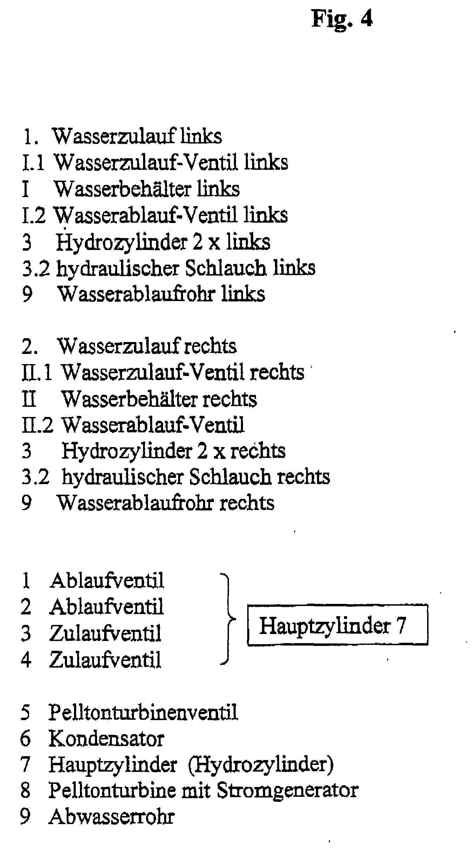

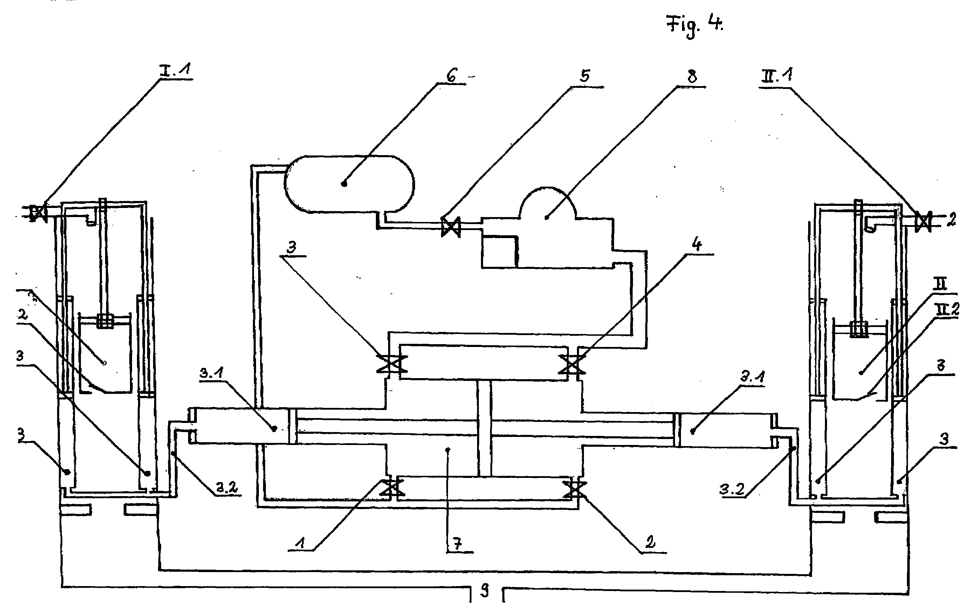

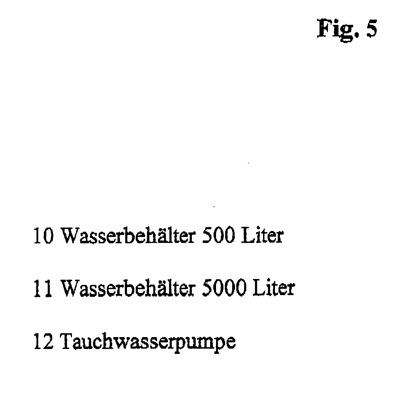

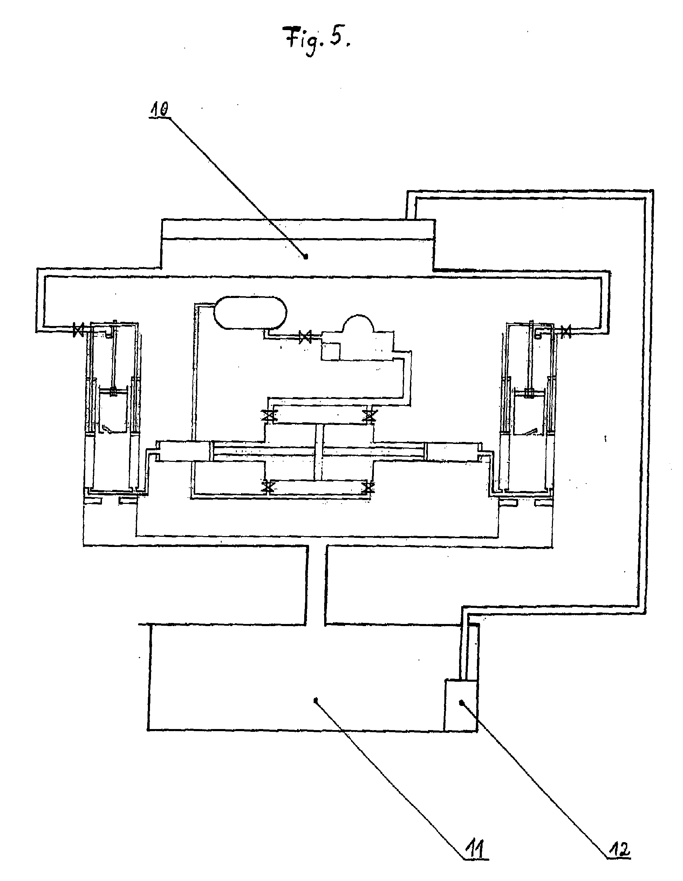

Die Inbetriebnahme zweier weiterer Wasserbehälter (Fig. 5), (10) 500 Liter und (11) 5000 Liter, und einer Tauchpumpe (12) erlaubt eine Wasserwiederverwertung von 48 m³ / Tag.
Techn. Daten:
Tauchpumpe -
   460 W, 220 V
   8 m ↑
   16000 l/h
   48000 1: 160041/h = 3 h
   3h x 460W = 1380 Wh

Für das Pumpen der 48 m³ Wasser sind 1380 Wh pro Tag nötig.

Für das Elektrische Ventile 1, 2, 3, 4 Hauptzylinder, 7 sind 200 W x 24 h = 4800 Wh pro Tag nötig. Hauptzylinder 7 sind 200 W x 24 h =4800 Wh

| Energetische Bilanz: | |
|---|---|
| Energieverbrauch: | |
| Wasserpumpe | 1380 Wh |
| Elektrische Ventile | + 4800 Wh |
| | 6180 Wh |

| Energiegewinn : | |
|---|---|
| 10KW x 24 h = | 240000 Wh |
| | - 6180 Wh |
| | 233820 Wh = 233.820 KWh |

## Patentansprüche

1. Betrieb einer Peltonturbine in einem geschlossenen Kreislaufsystem (Fig.3 & Fig.4) durch einen hydraulischen Motor (Fig. 1 & Fig.2), angetrieben mit der Wirkung der Gravitation

2. Antrieb einer Peltonturbine in einem geschlossenen Kreislaufsystem (Fig.3 & Fig.4)

3. Wiederverwendung des im geschlossenen Kreislaufsystem benötigten Wassers
